# EUROPÄISCHE PATENTSCHRIFT

(11) **EP 2 304 258 B1**
(45) Veröffentlichungstag und Bekanntmachung des Hinweises auf die Patenterteilung: **09.01.2013**
(21) Anmeldenummer: 09765440.4
(22) Anmeldetag: 10.06.2009
(51) Int. Cl.: F16C 33/32, F16C 33/62, F16C 37/00

(54) **WÄLZLAGER FÜR UNTERWASSERANWENDUNGEN**
ROLLER BEARING FOR UNDERWATER APPLICATIONS
PALIER À ROULEMENT POUR APPLICATIONS SOUS-MARINES

(30) Priorität: 20.06.2008 DE 102008029483
(43) Veröffentlichungstag der Anmeldung: 06.04.2011
(73) Patentinhaber: Schaeffler Technologies AG & Co. KG, 91074 Herzogenaurach (DE)
(72) Erfinder: BERESCH, Eduard, 97529 Sulzheim (DE); SCHWERDTFEGER, Heinz-Dieter, 82433 Bad Kohlgrub (DE)
(86) Internationale Anmeldenummer: PCT/DE2009/000814
(87) Internationale Veröffentlichungsnummer: WO 2009/152804

(56) Entgegenhaltungen:
- DE-B4- 10 164 848
- GB-A- 930 700
- JP-A- 2005 069 493
- US-A- 3 533 667

## Beschreibung

### Gebiet der Erfindung

Die Anmeldung betrifft ein Wälzlager für Unterwasseranwendungen, welches insbesondere bei Unterwasserturbinen zur Stromerzeugung eingesetzt wird. Ein Solches wälzlager ist aus der DE 101 64 848 B4 bekannt.

### Hintergrund der Erfindung

Solche Wälzlager sind dem Umgebungsmedium, d.h. dem Wasser, direkt ausgesetzt, wobei das aggressive Meerwasser zur Korrosion führt. Vor diesem Hintergrund sind solche Wälzlager aus korrosionsbeständigen Materialien ausgebildet, wie z.B. aus keramischen Werkstoffen oder aus speziellen Stählen. Die Lager für Unterwasserturbinen weisen einen Durchmesser auf der typischerweise zwischen 1 und 10 m liegt. Dies erschwert zusätzlich die Wartung des Lagers und seinen Austausch, wenn das Lager z.B. aufgrund Korrosion nicht mehr funktionstüchtig ist.

### Aufgabe der Erfindung

Der Erfindung liegt die Aufgabe zugrunde, ein verbessertes Wälzlager für Unterwasseranwendungen anzugeben.

### Lösung der Aufgabe

Die Aufgabe wird erfindungsgemäß gelöst durch ein Wälzlager gemäβ Anspruch 1.

Unter Dünnringlager wird hierbei ein Wälzlager verstanden, dessen Lagerringe eine Dicke aufweisen, die mehrfach kleiner ist als der Außendurchmesser des Lagers und insbesondere weniger als 1/10 des Außendurchmessers des Lagers beträgt. Das nicht-rostende Material kann z.B. ein nichtrostender Stahl, ein keramischer Werkstoff oder ein beschichteter Stahl sein.

Die Erfindung geht von der Überlegung aus, dass sich bei der Herstellung eines Wälzlagers, dessen Durchmesser >1 m, insbesondere im Bereich zwischen 1 und 5 m liegt, Gewicht einsparen lässt, indem zumindest einer der beiden Lagerringe als Lagerring eines Dünnringlagers ausgebildet ist. Solche Wälzlager für Unterwasseranwendungen werden nicht nur bei Unterwasserturbinen, sondern auch im Schiffbau und Stahl-Wasserbau eingesetzt. Dünnringlager sind im Allgemeinen durch eine geringe Masse, ein geringes Drehmoment und eine räumlich kompakte Konstruktion gekennzeichnet und weisen eine hohe Steifigkeit und Laufgenauigkeit auf. Wälzlager, dessen mindestens ein Lagerring als Lagerring eines Dünnringlagers ausgebildet ist, stellt eine Gewicht und Material sparende Ausführung dar, die speziell für Unterwasseranwendungen, bei denen eine Reparatur oder einen Austausch aufgrund der Größe des Lagers sowie der Umgebungsbedingungen besonders schwer ist, besonders geeignet ist.

Vorzugsweise ist der Lagerring nur im Bereich der Laufbahn dünner ausgestaltet. Seitlich der Laufbahn weist der Lagerring hierbei eine Stärke auf, die um das Vielfache dicker ist als die Stärke im Bereich der Laufbahn. Ein solches Lager lässt sich besonders leicht herstellen, indem nur im Bereich der Laufbahn Material abgetragen wird, wobei der Materialabtrag gering bleibt im Vergleich zu dem Fall, wenn der Lagerring über seine gesamte axiale Erstreckung ausgedünnt werden soll. Bei der Herstellung des Lagers kann von einem Rohrabschnitt ausgegangen werden, bei dem die Laufbahn des Lagers spanabhebend ausgebildet wird.

Um zusätzliches Gewicht zu sparen, sind nach einer bevorzugten Weiterbildung beide Lagerringe als Lagerringe eines Dünnringlagers ausgebildet.

Gemäß der Erfindung der Lagerring, der als Lagerring eines Dünnringlagers ausgebildet ist, eine Dicke auf, die in einem Verhältnis von ≤ 0,05 zu dem Durchmesser des Lagers steht. Bei einem Durchmesser des Wälzlagers bis 5 Metern liegt die Dicke des Lagerrings, der als Lagerring eines Dünnringlagers ausgebildet ist, unter 25 cm, wodurch das Gewicht des Lagers deutlich reduziert ist.

Im Hinblick auf eine besonders korrosionsbeständige Zusammensetzung der Wälzkörper sind diese bevorzugt aus einem rostfreien Eisen-Chrom-Molybdän-Stahl oder aus einem keramischen Werkstoff gebildet. Ein solcher Eisen-Chrom-Molybdän-Stahl, vorzugsweise mit der Werkstoffnummer 1.4108, ist unter dem Handelsnamen Chronidor bekannt und zeichnet sich durch eine sehr gute Korrosionsbeständigkeit aus. Als keramischer Werkstoff zur Ausbildung der Wälzkörper kann z.B. ein Si₃Ni₄-Keramikmaterial eingesetzt werden.

Die Korrosionsbeständigkeit des Wälzlagers wird erhöht, indem nach einer bevorzugten Variante auch die Lagerringe aus einem rostfreien Eisen-Chrom-Molybdän-Stahl, vorzugsweise mit der Werkstoffnummer 1.4108, ausgebildet sind. Durch eine bestimmte Oberflächenbeschaffenheit sowohl der Laufbahnen als auch der Wälzkörper werden hierbei vorteilhafte Abrolleigenschaften geschaffen, um die Reibung im Betrieb zu minimieren.

Gemäß einer weiteren bevorzugten Ausgestaltung ist der Käfig aus Kunststoff ausgebildet oder mit Teflon bzw. Kunststoff beschichtet. Zur Ausbildung des Käfigs kann beispielsweise Polyetheretherketon (PEEK) vorgesehen sein.

Aufgrund des Anwendungsgebiets des Wälzlagers ist der Gebrauch von flüssigen Schmiermitteln, wie z.B. Fett oder Öl, nicht sinnvoll. Um dieses Problem zu beheben, ist hierbei der Gebrauch von Feststoffschmiermittelschichten vorgesehen. Solche Feststoffschmiermittelschichten können z.B. aus PTFE-Beschichtungen, Molybdändisulfid-Beschichtungen oder Graphitbeschichtungen bestehen.

Nach einer bevorzugten Variante ist das Lagergehäuse mit Teflon beschichtet. Darüber hinaus ist bevorzugt zwischen dem Außenring und dem Lagergehäuse ein Spalt von beispielsweise 0,2 mm vorgesehen. Insbesondere ist auch zwischen dem Innenring und einer Welle zur Lagerung des Dünnringlagers ein solcher Spalt ausgebildet. Durch die Beschichtung des Lagergehäuses oder Lageraufnahme in Kombination mit dem Spalt wird ein Schiebesitz gebildet, so dass das Lager in der Lageraufnahme in sehr geringem Maße beweglich bleibt. Durch diese Konstruktion soll sich das Lager insbesondere nicht durch Korrosion festsetzen oder festfressen. Hierzu ist die dünne Beschichtung der Lageraufnahme mit z.B. Teflon vorgesehen.

Nach einer weiteren bevorzugten Ausgestaltung sind in dem Lagergehäuse Öffnungen zum Umspülen der Lagerteile mit Wasser ausgebildet. Das Umgebungsmedium Wasser, welches eine Viskosität von 1 cSt aufweist, kann hierbei als Kühlmittel betrachtet werden und wird deshalb durch die besondere Ausgestaltung des Lagergehäuses zu den beweglichen Lagerteilen geführt.

### Kurze Beschreibung der Zeichnung

Ein Ausführungsbeispiel der Erfindung ist anhand einer Zeichnung näher erläutert. Hierin zeigt die einzige Figur einen Schnitt durch eine Hälfte eines Wälzlagers.

### Ausführliche Beschreibung der Zeichnung

In der Figur ist ein Wälzlager 2 dargestellt, welches z.B. bei Unterwasserturbinen eingesetzt wird. Das Lager 2 umfasst einen Außenring 4 und einen Innenring 6, die in einem Lagergehäuse 8 angeordnet sind, von dem nur ein kleiner Ausschnitt sichtbar ist. Die Lagerringe 4,6 weisen Laufbahnen 10 auf, auf denen mehrere in einem Käfig 12 gehaltene Wälzkörper 14, die in Umfangsrichtung hintereinander angeordnet sind, rollen. Die kugelförmigen Wälzkörper 14 rollen im Betrieb des Lagers um eine Drehachse A des Lagers 2. Sowohl die Lagerringe 4,6 als auch die Wälzkörper 14 sind aus einem korrosionsbeständigen Material, wie z.B. aus einem rostfreien Eisen-Chrom-Molybdän-Stahl oder aus einem keramischen Werkstoff ausgebildet. Der Käfig 12 ist in diesem Ausführungsbeispiel aus Polyetheretherkaton (PEEK) ausgebildet.

Aufgrund des Anwendungsgebiets des Wälzlagers 2 ist das Lagergehäuse mit nicht mehr dargestellten Öffnungen versehen, so dass die anderen Lagerteile vom Wasser, das als Kühlmedium wirkt, umspült werden. Darüber hinaus ist das Lagergehäuse 8 in Richtung zum Außenring 4 hin mit einer Gleitschicht beschichtet und zwischen dem Lagergehäuse 8 und dem Au-βenring 4 ist ein in der Zeichnung nur angedeuteter Spalt 16 vorgesehen, so dass das Lager 2 in dem Lagergehäuse 8 relativ beweglich bleibt und sich durch Korrosion nicht festsetzen kann.

Das Wälzlager 2 weist in diesem Ausführungsbeispiel einen Durchmesser D von etwa 3 m auf. Das Wälzlager 2 ist als ein Dünnringlager ausgebildet, d.h. dass sowohl sein Außenring 4 als auch sein Innenring 6 eine Dicke d aufweisen, die um das Vielfache kleiner ist als der Durchmesser D des Lagers 2. Die Dicke d der Lagerringe 4,6 ist insbesondere kleiner als 15 cm, d.h. dass sie zu dem Durchmesser D in einem Verhältnis von <0,05 steht.

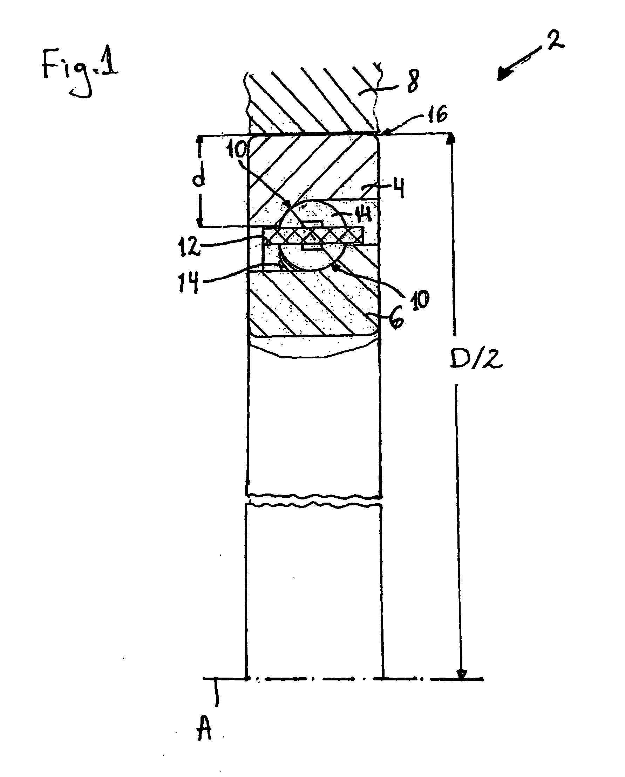

Alternativ zu der in Fig. 1 gezeigten Ausführung ist es möglich, das Wälzlager 2 derart auszugestalten, dass nur einer der Lagerringe 4,6 als ein Lagerring eines Dünnringlagers ausgestaltet ist und insbesondere das oben genannte Verhältnis erfüllt.

### Bezugszeichenliste

- 2: Wälzlager
- 4: Außenring
- 6: Innenring
- 10: Laufbahn
- 12: Käfig
- 14: Wälzkörper
- 16: Spalt

- A: Drehachse
- D: Lagerdurchmesser
- d: Lagerringdicke

## Patentansprüche

1. Wälzlager (2) für Unterwasseranwendungen umfassend in einem Lagergehäuse (8) angeordnet einen Außenring (4) und einen Innenring (6) aus einem nicht-rostenden Material, wobei zwischen den Lagerringen (4, 6) auf zugehörigen Laufbahnen (10) mehrere in einem Käfig (12) gehaltene Wälzkörper (14) aus einem korrosionsbeständigem Material angeordnet sind,
**dadurch gekennzeichnet,**
**dass** mindestens einer der Lagerringe (4, 6) als Lagerring eines Dünnringlagers ausgebildet ist,
wobei das Wälzlager (2) einen Lagerdurchmesser (D) >1m, insbesondere im Bereich zwischen 1 m und 5m aufweist, und
**dass** der Lagerring (4, 6), der als Lagerring eines Dünnringlagers ausgebildet ist, eine Dicke (d) aufweist, die in einem Verhältnis von ≤0,05 zu dem Lagerdurchmesser (D) steht.

2. Wälzlager (2) nach Anspruch 1,
**dadurch gekennzeichnet,**
**dass** der Lagerring (4, 6), der als Lagerring eines Dünnringlagers ausgebildet ist, nur im Bereich der Laufbahn (10) dünner ausgestaltet ist.

3. Wälzlager (2) nach Anspruch 1 oder 2,
**dadurch gekennzeichnet,**
**dass** beide Lagerringe (4, 6) als Lagerringe eines Dünnringlagers ausgebildet sind.

4. Wälzlager (2) nach einem der vorhergehenden Ansprüche,
**dadurch gekennzeichnet,**
**dass** die Wälzkörper (14) aus einem rostfreien Eisen-Chrom-Molybdän-Stahl oder aus einem keramischen Werkstoff gebildet sind.

5. Wälzlager (2) nach einem der vorhergehenden Ansprüche,
**dadurch gekennzeichnet,**
**dass** die Lagerringe (4, 6) aus einem rostfreien Eisen-Chrom-Molybdän-Stahl ausgebildet sind.

6. Wälzlager (2) nach einem der vorhergehenden Ansprüche,
**dadurch gekennzeichnet,**
**dass** der Käfig (12) aus Kunststoff ausgebildet ist oder mit Teflon oder Kunststoff beschichtet ist.

7. Wälzlager (2) nach einem der vorhergehenden Ansprüche,
**dadurch gekennzeichnet,**
**dass** die Wälzkörper (14) mit einer Feststoffschmierschicht beschichtet sind.

8. Wälzlager (2) nach einem der vorhergehenden Ansprüche,
**dadurch gekennzeichnet,**
**dass** ein Lagergehäuse (8) mit Teflon beschichtet ist.

9. Wälzlager (2) nach Anspruch 8,
**dadurch gekennzeichnet,**
**dass** zwischen dem Außenring (4) und dem Lagergehäuse (8) ein Spalt (16) vorgesehen ist.

10. Wälzlager (2) nach einem der vorhergehenden Ansprüche,
**dadurch gekennzeichnet,**
**dass** in dem Lagergehäuse (8) Öffnungen zum Umspülen der Lagerteile (4, 6, 12, 14) mit Wasser ausgebildet sind.

11. Verwendung eines Wälzlagers nach einem der vorhergehenden Ansprüche für Unterwasseranwendungen.

## Claims

1. Rolling bearing (2) for underwater applications, comprising an outer ring (4) and an inner ring (6) which are arranged in a bearing housing (8) and which are composed of a rust-proof material, with a plurality of rolling bodies (14) which are held in a cage (12) and which are composed of a corrosion-resistant material being arranged between the bearing rings (4, 6) on associated raceways (10),
**characterized**
**in that** at least one of the bearing rings (4, 6) is designed as a bearing ring of a thin-ring bearing,
the rolling bearing (2) having a bearing diameter (D) > 1 m, in particular in the range between 1 m and 5 m, and
**in that** the bearing ring (4, 6) which is designed as a bearing ring of a thin-ring bearing has a thickness (d) which is in a ratio of ≤ 0.05 to the bearing diameter (D).

2. Rolling bearing (2) according to Claim 1,
**characterized**
**in that** the bearing ring (4, 6) which is designed as a bearing ring of a thin-ring bearing is formed so as to be thinner only in the region of the raceway (10).

3. Rolling bearing (2) according to Claim 1 or 2,
**characterized**
**in that** both bearing rings (4, 6) are designed as bearing rings of a thin-ring bearing.

4. Rolling bearing (2) according to one of the preceding claims,
**characterized**
**in that** the rolling bodies (14) are formed from a rust-proof iron-chromium-molybdenum steel or from a ceramic material.

5. Rolling bearing (2) according to one of the preceding claims,
**characterized**
**in that** the bearing rings (4, 6) are formed from a rust-proof iron-chromium-molybdenum steel.

6. Rolling bearing (2) according to one of the preceding claims,
**characterized**
**in that** the cage (12) is formed from plastic or is coated with Teflon or plastic.

7. Rolling bearing (2) according to one of the preceding claims,
**characterized**
**in that** the rolling bodies (14) are coated with a solid lubricant layer.

8. Rolling bearing (2) according to one of the preceding claims,
**characterized**
**in that** a bearing housing (8) is coated with Teflon.

9. Rolling bearing (2) according to Claim 8,
**characterized**
**in that** a gap (16) is provided between the outer ring (4) and the bearing housing (8).

10. Rolling bearing (2) according to one of the preceding claims,
**characterized**
**in that** openings for enabling water to flow around the bearing parts (4, 6, 12, 14) are formed in the bearing housing (8).

11. Use of a rolling bearing according to one of the preceding claims for underwater applications.

## Revendications

1. Palier à roulement (2) pour applications sous-marines comprenant une bague extérieure (4) et une bague intérieure (6) en matière non oxydable disposées dans un carter de palier (8), plusieurs corps de rouleau (14) fabriqués en matière résistante à la corrosion maintenus dans une cage (12) étant disposés sur les pistes de roulement (10) associées entre les bagues de palier (4, 6) ;
**caractérisé en ce que** :
au moins une des bagues de palier (4, 6) prend la forme d'une bague de palier de palier mince ;
le palier à roulement (2) présente un diamètre de palier (D) > 1 m, notamment dans la zone comprise entre 1 m et 5 m ; et
la bague de palier (4, 6) prenant la forme d'une bague de palier de palier mince présente une épaisseur (d) présentant un rapport de ≤ 0,05 par rapport au diamètre de palier (D).

2. Palier à roulement (2) selon la revendication 1, **caractérisé en ce que** la bague de palier (4, 6) prenant la forme d'une bague de palier de palier mince n'est mince que dans la zone de la piste de roulement (10).

3. Palier à roulement (2) selon la revendication 1 ou 2, **caractérisé en ce que** les deux bagues de palier (4, 6) prennent la forme de bagues de palier de palier mince.

4. Palier à roulement (2) selon l'une quelconque des revendications précédentes, **caractérisé en ce que** les corps de rouleau (14) sont fabriqués à partir d'un acier de fer, chrome et molybdène inoxydable ou d'une matière céramique.

5. Palier à roulement (2) selon l'une quelconque des revendications précédentes, **caractérisé en ce que** les bagues de palier (4, 6) sont fabriquées à partir d'un acier de fer, chrome et molybdène inoxydable.

6. Palier à roulement (2) selon l'une quelconque des revendications précédentes, **caractérisé en ce que** la cage (12) est réalisée en matière plastique ou est revêtue de téflon ou de matière plastique.

7. Palier à roulement (2) selon l'une quelconque des revendications précédentes, **caractérisé en ce que** les corps de rouleau (14) sont revêtus d'une couche de lubrifiant solide.

8. Palier à roulement (2) selon l'une quelconque des revendications précédentes, **caractérisé en ce qu'**un carter de palier (8) est revêtu de téflon.

9. Palier à roulement (2) selon la revendication 8, **caractérisé en ce qu'**une fente (16) est prévue entre la bague extérieure (4) et le carter de palier (8).

10. Palier à roulement (2) selon l'une quelconque des revendications précédentes, **caractérisé en ce que** des ouvertures de rinçage à l'eau des parties de palier (4, 6, 12, 14) sont réalisées dans le carter de palier (8).

11. Utilisation d'un palier à rouleau selon l'une quelconque des revendications précédentes pour des applications sous-marines.
